# EUROPEAN PATENT SPECIFICATION

(11) **EP 3 953 419 B1**
(45) Date of publication and mention of the grant of the patent: **19.04.2023**
(21) Application number: 20711619.5
(22) Date of filing: 23.03.2020
(51) Int. Cl.: C08L 23/12, C25D 3/00, C25D 5/14, C25D 5/56, C25D 7/00, C23C 18/16, C23C 18/20, C23C 18/24, C23C 18/26, C23C 18/28, C23C 18/30, C25D 5/12, C23C 18/52

(54) **POLYMER COMPOSITIONS SUITABLE FOR PRODUCING PLATED PRODUCTS**
POLYMERZUSAMMENSETZUNGEN ZUR HERSTELLUNG VON PLATTIERTEN PRODUKTEN
COMPOSITIONS POLYMÈRES CONVENANT À LA PRODUCTION DE PRODUITS PLAQUÉS

(30) Priority: 12.04.2019 EP 19168883
(43) Date of publication of application: 16.02.2022
(73) Proprietor: Basell Poliolefine Italia S.r.l., 20121 Milano (IT)
(72) Inventor: LUNGHI, Luca, 44122 Ferrara (IT); LUJAN ABARCA, Maria Aranzazu, 43206 Reus (ES); FOGUET ROCA, Alberto, 43206 REUS (ES)
(74) Representative: LyondellBasell
(86) International application number: PCT/EP2020/057913
(87) International publication number: WO 2020/207772

(56) References cited:
- WO-A1-03/025256
- US-A- 4 002 595
- US-A- 4 038 042
- US-A- 4 278 510
- US-A1- 2015 099 840

## Description

### FIELD OF THE INVENTION

In general, the present disclosure relates to the field of chemistry. More specifically, the present disclosure is directed to the use of specific polymer compositions for the production of metal-plated products as well as to the articles so obtained.

### BACKGROUND OF THE INVENTION

Depositing metal-plating on plastics, in addition to the aesthetic advantages, provides a number of potential physical enhancements to the plastic. These include added corrosion resistance, strength (in certain respects), and chemical resistance. The most common types of metals used for plating on plastics are copper, chromium, gold, silver and nickel, although other metals can be used. The metal-plating process is typically applied to provide automotive parts and surfaces.

Plated plastic parts are advantageous in that they are considerably more lightweight, flexible and inexpensive than similar metal components.

EP 612,801 reports chrome-plating of calcium carbonate-filled polypropylene further modified with a segmented copolymer of polypropylene// poly (methyl methacrylate). The plating process is said to proceed at a high rate and good adhesion.

WO 03/025256 mentions polyolefin alloys that are receptive to metal plating. These compositions also have enhanced properties and are easily processed into articles by various molding methods. Such compositions include polyolefin homopolymers or copolymers, acrylonitrile-butadiene-styrene (ABS) polymers, and a blend of at least one styrene monoolefin copolymer and at least one styrene diolefin copolymer. Such blends are reported to have excellent platability and good physical properties including enhanced rigidity, toughness, and dimensional stability.

### SUMMARY OF THE INVENTION

The object of this invention is the use of polymer compositions for the production of metal-plated products, where the compositions comprise by weight:
a) 40-60%, or 45-50%, of a propylene homopolymer, or propylene copolymer containing up to 5% by weight of ethylene and/or another C₄-C₁₀ α-olefin and having a melting temperature of 155°C or higher and/or a fraction soluble in xylene at 25°C of 10% by weight or less;
b) 10-20%, or 12-18%, of an ethylene based elastoplastic copolymer (plastomer), optionally an impact modifier, such as for example a copolymer of ethylene with C₄-C₁₀ α-olefin;
c) 2-6%, such as 3-4%, of a styrene block copolymer;
d) optionally up to 3%, such as 1-2%, of a propylene homopolymer having a Melt Flow Rate (230°C/2.16 kg) of 500 g/10 min. or more;
e) 15-50%, or 25-40%, of a filler; and,
f) optionally up to 6%, such as 1-4%, of a color pigment, optionally, black color.

Another object of this invention is a metal-plated article produced by using the above-mentioned polymer composition.

While multiple embodiments are disclosed, still other embodiments will become apparent to those skilled in the art from the following detailed description. As will be apparent, certain embodiments, as disclosed herein, are capable of modifications in various obvious aspects, all without departing from the spirit and scope of the claims as presented herein. Accordingly, the drawings and detailed description are to be regarded as illustrative in nature and not restrictive.

### DETAILED DESCRIPTION OF THE INVENTION

In a general embodiment, the present invention relates to the use of polymer compositions for the production of metal-plated products, where the compositions comprise by weight:
a) 40-60%, optionally 45-50%, of a propylene homopolymer, or propylene copolymer containing up to 5% by weight of ethylene and/or another C₄-C₁₀ α-olefin and having a melting temperature of 155°C or higher and/or a fration soluble in xylene at 25°C of 10% by weight or less;
b) 10-20%, optionally 12-18%, of an ethylene based elastoplastic copolymer (plastomer), optionally an impact modifier, such as for example a copolymer of ethylene with C₄-C₁₀ α-olefin;
c) 2-6%, optionally 3-4%, of a styrene block copolymer;
d) 0-3% optionally 1-2%, of a propylene homopolymer having a Melt Flow Rate (230°C/2.16 kg) of 500 g/10 min. or more;
e) 15-50%, optionally 25-40%, of a filler; and
f) 0-6%, optionally 1-4%, of a color pigment, optionally black color.

According to one embodiment of the invention, the filler is selected from the group comprising: talc (hydrated magnesium silicate), calcium carbonate (chalk), barium sulphate and mixtures thereof.

Another object of this invention is a metal-plated article produced by using the above-mentioned polymer composition. Such metal-plated articles may be used in the automotive industry for both interior and exterior parts or surfaces, as well as in the furniture industry and for the production tooling and household items.

According to another embodiment of the invention metals used for plating are copper, chromium, gold, silver, aluminum, nickel and other alloys, such as steel and bronze.

In some embodiments, the polymer composition according to the invention is further made from or contain an additives composition.

In those embodiments, the additives composition is present in an amount from about 0 to about 5 weight percent, relative to the total weight of the polyolefin-based composition. In other embodiments, the additives composition is present in an amount of 1, 2, 3, 4, or 5 weight percent, relative to the total weight of the polyolefin-based composition.

Typical examples of component (a) are commercial propylene homopolymers, such as *Adstif* HA600U, *Hostalen* PP HF500B, *Moplen* MP HF400G, MP HF500H, MP HP400H, MP HP400R, MP HP500N, MP HP500V, MP HP500W or MP HP400G, all commercialized by LyondellBasell.

A typical example of component (b) is a copolymer of ethylene with octene-1 containing at least 20 wt%, preferably from 20 to 50 wt%, more preferably from 20 to 45% by weight of units derived from octene-1 as comonomer (13C-NMR analysis).

Other typical examples of component (b) are ethylene/octene-1 plastomers having a hardness (Shore A, ASTM D-2240) value equal to or lower than 90 points, preferably equal to or lower than 85 points, more preferably equal to or lower than 80 points. The ethylene-based plastomer (b) has density preferably lower than 0.89, preferably lower than 0.87 g/cm3 (measured according to ASTM D-792). For example suitable components (b) are Engage^{™} 7467, 8100, 8150, and 8200, commercially available from DuPont Dow Elastomers.

Typical examples of component (c) are hydrogenated or non-hydrogenated styrene block copolymers. These block copolymers have blocks derived from a diene, such as polybutadiene or polyisoprene blocks, and blocks derived from polystyrene or derivatives thereof. The block copolymers may be of different types, for example of the AB, ABA, A(B)₄ type. Said block copolymers may be hydrogenated; a mixture of two or more of the above- mentioned block copolymers may be used. More typically, the block copolymer has formula A-B-A', where A and A' are each a thermoplastic endblock which includes a styrenic moiety and where B is an elastomeric elastomeric polybutadiene, poly (ethylenebutylene) or poly (ethylenepropylene) midblock.

Typically, the A and A' endblocks of the block copolymer are identical and are selected from the group consisting of polystyrene and polystyrene homologs, and even more preferably the A and A' endblocks are polystyrene or poly (alpha-methylstyrene). Preferred block copolymers are styrene-butadiene-styrene polymers, referred to as SBS. Since the main chain of an SBS contains unsaturations which are oxidation sensitive, at least part of the aliphatic unsaturations of the copolymer is preferably hydrogenated; these products are commercially available elastomeric A-B-A' block copolymers having a saturated or essentially saturated poly (ethylene-butylene) midblock B comprising units having formula 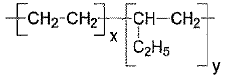 where x and y are positive integers, and polystyrene endblocks A and A' each represented by the formula: 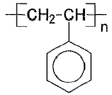 where n is a positive integer, and are referred to as SEBS block copolymers.

SBS and SEBS are commercially available under the trade designation Kraton^{™} D, such as Kraton^{™} D 1101 and 1107, and Kraton^{™} G, such as Kraton^{™} G 1650, Kraton^{™} G 1652 and Kraton^{™} GX 1657, all sold by Kraton Polymers. Materials of this general type are disclosed in USP 4,323, 534 and 4,355, 425.

Other styrene block copolymers suitable for the compositions of the invention are styrene-ethylenepropylene-styrene polymers, referred to as SEPS commercially available are under the name Septon^{™} from Kuraray America Inc.

Typical examples of component (d) are the commercially available polypropylene homopolymers having extremely high melt flow rate, for example higher than 1000 g/10 min (230°C/2.16 kg), and very narrow molecular weight distribution, for example Mw/Mn lower than 4, such as for example *Metocene* MF650Y commercialized by LyondellBasell.

Talc can be used as a filler in the compositions of the present invention. Typically the talc suitable for use in the compositions of the present invention as component (e) is a commercial talc in particle form having an average particle size (Sedigraph ISO 13317-3) ranging from (D50) 0.1 to 20 micrometers (µιη). Suitable for use in the composition of the present invention is also an high aspect ratio talc having a lamellarity index equal to or higher than 2.8. The lamellarity index characterizes the shape of the particle, and more particularly its flatness (large dimension/thickness). The lamellarity index may be measured by the difference between, on the one hand, the value of the mean dimension of the particles of the powder obtained by a particle size measurement by Malvern laser diffraction using a wet method (standard AFNOR NFX11-666) and on the other hand, the value of the mean diameter D50 obtained by a measurement by sedimentation using a "Sedigraph" (standard AFNOR XI 1-683), this difference being related to the mean diameter D50. Reference is made to the article "G.BAUDET and J. P. RONA, Ind. Min. Mines et Carr. Les techn. June, July 1990, pp 55-61" which shows that this index is correlated to the mean ratio of the largest dimension of the particle to its smallest dimension. "High lamellarity" is understood to mean a powder of which the lamellarity index is high and in particular greater than 2.8, optionally equal to or higher than 4.

Exemplary additives include colorants, odorants, deodorants, plasticizers, impact modifiers, nucleating agents, lubricants, surfactants, wetting agents, flame retardants, ultraviolet light stabilizers, antioxidants, biocides, metal deactivating agents, thickening agents, heat stabilizers, defoaming agents, coupling agents, polymer alloy compatibilizing agents, blowing agents, emulsifiers, crosslinking agents, waxes, particulates, flow promoters, and other materials added to enhance processability or end-use properties of the polymeric components.

The polymer compositions according to the present invention are obtainable by melting and mixing the components. The mixing is typically effected in a mixing apparatus at temperatures comprised between 180° and 310 °C, preferably, between 190° and 280 °C, more preferably, between 200° and 250 °C.

Any known apparatus and technology can be used for this purpose. Useful mixing apparatus in this context are in particular extruders or kneaders, and particular preference is given to twin-screw extruders. It is also possible to premix the components at room temperature in a mixing apparatus.

Preference is given to initially melting components (a) and (d) and modifiers (b) and (c), and subsequently mixing component (e) with the melt, in order to reduce the abrasion in the mixing apparatus and the fiber breakage.

It is also possible to use a masterbatch in premixed form.

During the preparation of the polymer compositions of the present invention, besides the main components (a) and (b) and (c), it is possible to introduce additives commonly employed in the art, such as stabilizing agents (against heat, light, U.V.), nucleating agents, plasticizers, antiacids, antistatic, slip agents such as stearates and polar waxes and water repellent agents.

The metal-plating is carried out according to any procedure known in the art, as described for example in US Patent 4,552,626 and/or by the following process.

First of all, to ensure adhesion of the metal, the surface of the article to be plated must be thoroughly cleaned and made hydrophilic, before treatment to deglaze the polymer composition and remove the filler from the surface. Grease, mold release agents, dirt and even fingerprints should be removed from the surface. An alkaline cleaning solution with surfactants, chelators, and dispersants may be used. A preferred cleaning solution is an alkaline soak cleaner commercially available from Enthone Inc. under trade name Enplate^{®} PZ-454. Preferably, the articles are cleaned by immersing them for about 3 to 10 minutes in a bath of this cleaning solution, which is preferably at an operating temperature of about 43° to 60°C. After cleaning, preferably the articles are rinsed in fresh water, such as by immersion, to remove the cleaning solution.

The mineral filler can be removed from the polymer composition surface by contact with a suitable organic or mineral acid which will dissolve and remove the filler. Acids having a normality of less than about 4.0 and preferably about 1.0 to 3.0 are generally satisfactory. Preferably the articles are immersed in a suitable acid bath at an operating temperature of about 15° to 43°C. Suitable acid is ammonium bi-floride commercially available from Atotech Italia S.r.l. under trade name Adhemax PA Conditioner.

Preferably, although not necessarily, to obtain improved adhesion of the electroplated metal, the treated polymer surface may be cleaned and dried before electroless plating. Preferably, the treated surface is cleaned by washing it in tap water, preferably several times, and then distilled or deionized water. Preferably, the polymer surface is cleaned by immersion in baths of tap and deionized water for at least about 10 to 60 seconds at an operating temperature in the range of about 15° to 50°C.

The treated polymer surface retains considerable moisture which preferably, although not necessarily, should be removed such as by drying before applying a catalyst for electroless painting to provide improved adhesion of the electroplated metal to the surface of the resin. Preferably, the cleaned and treated polymer surface is dried in a forced air oven with filtered air heated to a temperature of about 50° to 90° F. Usually the resin surface to the forced hot air in the oven for about 15 to 30 minutes.

To enable metallic electroplating, an electrically conductive metallic layer is deposited on the treated, and preferably cleaned and dried, resin surface of the article. The electrically conductive metallic layer can be deposited by conventional electroless plating techniques. Preferably, the surface is electroless plated by tin-palladium transfer techniques in which the surface is sensitized, activated or catalyzed, and then contacted with a metallic salt solution to deposit elemental metal by chemical reduction.

The electroless plated resin surface is electroplated to provide a metallic finish. Preferably, the surface is electroplated with copper followed by nickel or chromium or with nickel followed by chromium. The surface can be electroplated by conventional techniques. The thickness of the electroplated coating is generally in the range of about 0.0025 to 0.25 mm., usually, about 0.0075 to 0.15 mm. and preferably about 0.015 to 0.05 mm. To provide improved corrosion resistance and a truer color of any chromium layer, a nickel layer is usually deposited on the copper. To provide abrasion resistance and a brilliant and decorative finish a layer of layers of chromium are deposited. Preferably, to prevent contamination the resin surface is washed or rinsed between each bath such as by immersion in a fresh water bath at room temperature which is preferably agitated. At the end of the cycles the metallic plated articles are then dried in a forced air oven with filtered air heated to a temperature of about 50° to 90°C for about 15 to 30 minutes.

As used in this specification and the claims, the singular forms "a," "an," and "the" include plural referents, unless the context dictates otherwise.

As used in this specification and the claims, the terms "comprising," "containing," or "including" mean that at least the named compound, element, material, particle, or method step, etc., is present in the composition, the article, or the method, but does not exclude the presence of other compounds, elements, materials, particles, or method steps, etc., even if the other such compounds, elements, materials, particles, or method steps, etc., have the same function as that, which is named, unless expressly excluded in the claims. It is also to be understood that the mention of one or more method steps does not preclude the presence of additional method steps before or after the combined recited steps or intervening method steps between those steps expressly identified.

Moreover, it is also to be understood that the lettering of process steps or ingredients is a means for identifying discrete activities or ingredients and the recited lettering can be arranged in any sequence, unless expressly indicated.

For the purpose of the present description and of the claims which follow, except where otherwise indicated, numbers expressing amounts, quantities, percentages, and so forth, are to be understood as being modified by the term "about". Also, ranges include any combination of the maximum and minimum points disclosed and include any intermediate ranges therein, which may or may not be specifically enumerated herein.

### Definitions

In the present description, the term "additives composition" refers to a composition made from or containing at least one additive.

In the present description, the term "homopolymer", as used herein, is consistent with its ordinary meaning. To the extent that a homopolymer may contain one or more monomeric units, the incorporation of any additional monomeric units has no measurable effect on the polymer's primary, secondary, or tertiary structure or no effect on the polymer's physical or chemical properties. In other words, there is no measureable difference between a polymer comprising 100 weight percent of a first monomeric unit, and a co-polymer that includes more than one monomeric units.

In the present description, the term "polymer" means a macromolecular compound prepared by polymerizing monomers of the same or different type. The term "polymer" includes homopolymers, copolymers, terpolymers, interpolymers, and so on.

In the present description, the term "polymer composition" refers to a composition made from or containing at least one polymer.

In the present description, the term C₄-C₁₀ α-olefin refers to an alpha-olefin of formula CH₂=CH-R, wherein R is a linear or branched alkyl containing from 2 to 8 carbon atoms.

In the present description, the term "room temperature" refers to a temperature around +23 degrees Celsius.

For purposes of any patent application filed in jurisdictions (such as the United States) in which the term "about" is recognized as adding flexibility without limitation to the disclosed ranges, it is understood that all numbers disclosed herein are approximates unless otherwise noted. According, as a non-limiting example, where the range 40-60% is disclosed it will be understood that for purposes of patent prosecution and enforcement in the United States, such a range will be read as "about 40-60 %.

The wordings "up to", "at most", "or more" or "or less" should be interpreted as having a lower limit that requires the presence of the element. Accordingly, as a non-limiting example, where the range "up to 5%" is disclosed it will be understood that for purposes of patent prosecution and enforcement in the United States, such a range will be read as between about, but greater than, 0 to about 5%.

ISO 1133 is entitled "Test Method for Melt Flow Rates of Thermoplastics by Extrusion Plastometer." The term "ISO 1133" as used herein refers to the standard test method for determining Melt Flow Rates of thermoplastics by extrusion plastometer. In general, this test method covers the determination of the rate of extrusion of molten thermoplastic resins using an extrusion plastometer. After a specified preheating time, resin is extruded through a die with a specified length and orifice diameter under prescribed conditions of temperature, load, and piston position in the barrel. This test method was approved on February 1, 2012 and published on March 2012, the contents of which are incorporated herein by reference in its entirety.

Throughout the present description and claims, the standard Melt Flow Rate values of polypropylene polymers are measured according to ISO 1133, using a piston load of 2.16 kg and at a temperature of 230 degrees Celsius. (Melt Flow Rate: Determined according to the method ISO 1133 (230° C, 2.16 kg)).

Xylene cold soluble content (XS): Xylene soluble fraction is determined according to the following method. 2.5 g of polymer and 250 cm³ of o-xylene are introduced in a glass flask equipped with a refrigerator and a magnetical stirrer. The temperature is raised in 30 minutes from room temperature up to the boiling point of the solvent (135°C). The so obtained clear solution is then kept under reflux and stirring for further 30 minutes. The closed flask is then kept in a thermostatic water bath at 25 °C for 30 minutes as well so that the crystallization of the insoluble (XI) part of the sample takes place. The so formed solid is filtered on quick filtering paper. 100 cm3 of the filtered liquid is poured in a previously weighed aluminum container, which is heated on a heating plate under nitrogen flow, to remove the solvent by evaporation. The container is then kept in an oven at 80 °C under vacuum to dryness and then weighed after constant weight is obtained. Thus one calculates the percent by weight of polymer soluble and insoluble in xylene at 25 °C.

The Elastic Flexural Modulus is measured according to ISO 178, while the Tensile Stress at Break is measured according to ISO 527.

### DESCRIPTION OF THE FIGURES

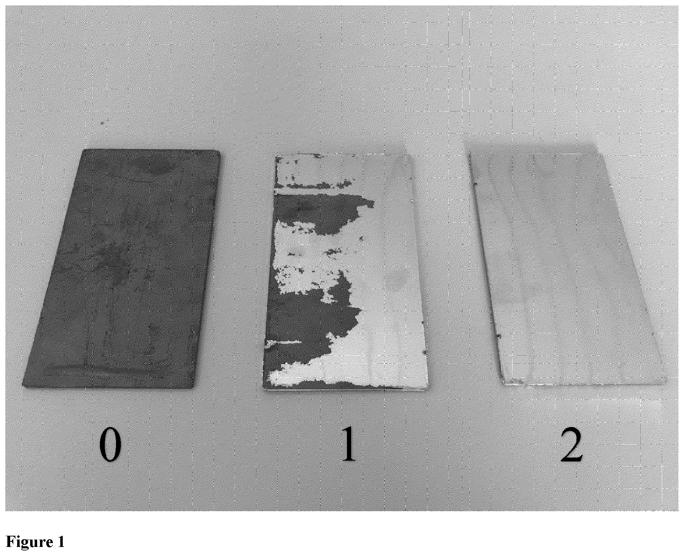

Figure 1: it shows an example of the ranking given to the chroming quality by assigning a score (0=no chroming, 1=acceptable; 2= good) on the basis of simple visual evaluation. The plaque on the left was assigned score 0, the plaque in the middle was assigned a score 1 and the plaque on the right was assigned a score 2.

### EXAMPLES

The following examples are included to demonstrate embodiments. It should be appreciated by those of skill in the art that the techniques disclosed in the examples which follow represent techniques discovered to function well, and thus can be considered to constitute exemplary modes of practice. However, those of skill in the art should, in light of the present disclosure, appreciate that many changes can be made in the specific embodiments which are disclosed and still obtain a like or similar result without departing from the spirit and scope of this disclosure.

For the comparative examples and the examples of an embodiment, various compounds were formulated to prepare test specimen.

### Example 1 - Preparation of Polymer Composition 1

Polymer Composition 1 was prepared by melting and mixing the following components: 35.8% by weight of *Adstif* HA600U as component (a), 14.8% by weight of Engage^{™} 7467 as component (b), 3.3% by weight of Kraton^{™} D 1101 as component (c), 1.6% by weight of Metocene^{™} MF650Y as component (d), 40% by weight of talc (the commercial product sold under the trademark JETFINE^{®} 3CA) as component (e), 1% by weight of black pigment (the commerical product sold under the name BK MB LD-32232) as component (f) and 3.5% by weight of master additives. The mixing was effected in a twin-screw extruder at a temperature of 280°C. Components (a) and (d) and modifier components (b) and (c) were initally molten, and subsequently component (e) was mixed with the melt.

### Example 2 - Preparation of Polymer Composition 2

Polymer Composition 2 was prepared as described in Example 1 with only the difference that CaCO₃ was used as component (e) instead of talc.

### Example 3 - Preparation of Polymer Composition 3

Polymer Composition 3 was prepared as described in Example 1 with only the difference that no black pigment was used and the polymer components were re-balanced to maintain the same relative proportions in weight as defined in Example 1

### Example 4 - Preparation of Polymer Composition 4

Polymer Composition 4 was prepared as described in Example 1 with the difference that a mixture of 40 % by weight of CaCO₃ and 15 % by weight of mica was used as component (e) instead of 40% by weight of talc and the polymer components were re-balanced to maintain the same relative proportions in weight as defined in Example 1.

### Example 5 - Preparation of Polymer Composition 5

Polymer Composition 5 was prepared as described in Example 1 with the difference that 50% by weight of talc was used as component (e) instead of 40% by weight and the polymer components were re-balanced to maintain the same relative proportions in weight as defined in Example 1.

### Example 6 - Preparation of Polymer Composition 6

Polymer Composition 6 was prepared as described in Example 1 with the difference that 50% by weight of CaCO₃ was used as component (e) instead of 40% by weight of talc and the polymer components were re-balanced to maintain the same relative proportions in weight as defined in Example 1.

### Example 7 - Preparation of Polymer Composition 7

Polymer Composition 7 was prepared as described in Example 1 with the only difference that talc HAR 3G 84L (supplied by IMYERS Specialties) was used as component (e).

### Comparative Example 1

For comparative purposes the following Polymer Composition A was prepared. Polymer Composition A was prepared by melting and mixing the following components: 47 % by weight of *Hifax* CA 60 A (supplied by Lyondell Basell), 50% by weight of talc Ultra C, 1% by weight of black pigment and 2% of master additives.

### Comparative Example 2

For comparative purposes the commerical polymer Metocene^{™} MF650Y was also used in the chromium-plating tests.

### Example 8 - Chromium-plating process for preparing chromium-plated plaques

### Cleaning the articles

Rectangular plaques made of the polymer compositions prepared according to the previous Examples 1-7 and Comparative Examples 1 and 2 were cleaned with an alkaline soak cleaner commercially available from Enthone Inc. under trade name Enplate^{®} PZ-454. The plaques were cleaned by immersing them for about 5 minutes in a bath of this cleaning solution at an operating temperature of 50°C. After cleaning the articles were rinsed in fresh water, by immersion, to remove the cleaning solution.

### Removal of Filler from the Resin Surface

The mineral filler was removed from the plaques surfaces by immersing the plaques in a bath of ammonium bi-floride commercially available from Atotech Italia S.r.l. under trade name Adhemax^{®} PA Conditioner at an operating temperature of 30°C.

### Cleaning the treated Resin Surface

The plaques were then further cleaned by washing them in tap water several times, and then in deionized water for about 40 seconds at an operating temperature of about 37°C. Drying the treated Resin Surface

The plaques surfaceswere then dried in a forced air oven with filtered air heated to a temperature of about 70°C for about 20 minutes.

### Electroless plating of the Resin Surface

The plaques surfaces were electroless plated by tin-palladium transfer techniques, , i.e. contacted with CrCl₃ aqueous solution to deposit elemental chromium by chemical reduction. Electroplating

The electroless plated plaques surfaces were electroplated to provide a metallic finish. The surfaces were electroplated with copper followed by nickel followed by chromium. The thickness of the electroplated coating was about 0.66 mm. At the end of the plating cycles the chromium plated articles were dried in a forced air oven with filtered air heated to a temperature of about 70°C for about 20 minutes.

### Example 9 - Quality evaluation of the chromium-plated articles

The results of the chromium-plating process carried out as described in previous Example 8 on rectangular plaques made of the polymer compositions prepared according to the previous Examples 1-7 and Comparative Examples 1 and 2 are reported in the following Table 1. Plaques have been evaluated considering the adhesion of the chromed coating, scratch resistance, possibility of delamination. An overall ranking has been quantified assigning a score (0=no chroming, 1=acceptable; 2= good) on the basis of simple visual evaluation. An example of the assigment of such "chroming scores" is provided in Figure 1.

**Table 1**

| **Polymer Composition (Examples)** | **1** | **2** | **3** | **4** | **5** | **6** | **Comp. 1** | **7** | **Comp. 2** |
|---|---|---|---|---|---|---|---|---|---|
| Chroming Score * | 2 | 2 | 1 | 2 | 2 | 2 | 0 | 1 | 0 |

| | | | | | | | | | |
|---|---|---|---|---|---|---|---|---|---|
| * 0 = No chroming, 1 = Acceptable, 2 = Good | | | | | | | | | |

The results reported in Table 1 show that only some specific polymer compositions allow to obtain a good quality chroming.

### Example 10 - Mechanical properties evalution of the chromium-plated articles

Elastic flexural modulus (ISO 178) and tensile stress at break (ISO 527) were measured for the rectangular plaques made of the polymer compositions prepared according to the previous Examples 1, 2, 4, 5 and 6 before and after chroming process according to Example 8. The results of such tests are reported in Table 2 and are expressed in terms of percent improvement of the mechanical property after chroming.

**Table 2**

| **Polymer Composition (Examples)** | | **1** | **2** | **4** | **5** | **6** |
|---|---|---|---|---|---|---|
| Elastic Flexural Modulus - ISO 178 | Before (MPa) | 3700 | 1530 | 1670 | 3610 | 1600 |
| | After (MPa) | 9940 | 8670 | 8950 | 13540 | 7940 |
| | Improvement (%) | 168 | 466 | 436 | 275 | 396 |
| Tensile Stress at break - ISO 527 | Before (MPa) | 20.0 | 12.6 | 10.0 | 18.3 | 10.0 |
| | After (MPa) | 22.6 | 18.8 | 14.1 | 18.3 | 12.4 |
| | Improvement (%) | 13 | 49 | 41 | 0 | 24 |

The results reported in Table 2 show that measured mechanical properties of the plaques in terms of both flexibility and stiffness) are generally improved after the chroming process.

## Claims

1. Use of a polymer composition for the production of metal-plated articles, where the composition comprises by weight:
a) 40-60% of a propylene homopolymer, or propylene copolymer containing up to 5% by weight of ethylene and/or another C₄-C₁₀ α-olefin, and having a melting temperature of 155°C or higher and/or a fraction soluble in xylene at 25°C of 10% by weight or less;
b) 10-20% of an ethylene-based elastoplastic copolymer (plastomer), optionally a copolymer of ethylene with C₄-C₁₀ α-olefin;
c) 2-6% of a styrene block copolymer;
d) optionally up to 3% of a propylene homopolymer having a Melt Flow Rate (230°C/2.16 kg) of 500 g/10 min. or more;
e) 15-40% of a filler; and,
f) optionally up to 6% of a color pigment.

2. The use according to claim 1, wherein the component (a) is present at concentrations of 45-50% by weight.

3. The use according to claim 1, wherein the component (b) is present at concentrations of 12-18% by weight.

4. The use according to claim 1, wherein the component (c) is present at concentrations of 3-4% by weight.

5. The use according to claim 1, wherein the component (d) is present at concentrations of 1-2% by weight.

6. The use according to claim 1, wherein the component (e) is present at concentrations of 25-40% by weight.

7. The use according to claim 1, wherein the component (f) is present at concentrations of 1-4% by weight.

8. The use according to claim 1, wherein the metal used for plating is selected from the group consisting of copper, chromium, gold, silver, aluminum, nickel and metal alloys, optionally steel and bronze.

9. The use according to claim 1, wherein the color pigment is black color.

10. A metal-plated article prepared by using the polymer composition mentioned in any of the previous claims 1-9.

11. Use of the metal-plated article according to claim 10 in the automotive industry for the production of both interior and exterior parts or surfaces.

12. Use of the metal-plated article according to claim 10 in the furniture industry.

13. Use of the metal-plated article according to claim 10 for the production of tooling and household items.

## Patentansprüche

1. Verwendung einer Polymerzusammensetzung zur Herstellung von metallplattierten Artikeln, wobei die Zusammensetzung, bezogen auf das Gewicht, folgendes umfasst:
a) 40 bis 60 % eines Propylenhomopolymers oder Propylencopolymers, das bis zu 5 Gew.% Ethylen und/oder anderes C₄- bis C₁₀-α-Olefin enthält, und eine Schmelztemperatur von 155 °C oder höher und/oder eine in Xylol bei 25 °C lösliche Fraktion von 10 Gew.% oder weniger aufweist;
b) 10 bis 20 % eines elastoplastischen Copolymers (Plastomers) auf Ethylenbasis, gegebenenfalls eines Copolymers von Ethylen mit C₄- bis C₁₀-α-Olefin;
c) 2 bis 6 % eines Styrolblockcopolymers;
d) gegebenenfalls bis zu 3 % eines Propylenhomopolymers mit einer Schmelzflussrate (230 °C/2,16 kg) von 500 g/10 min. oder mehr;
e) 15 bis 40 % eines Füllstoffs; und
f) gegebenenfalls bis zu 6 % eines Farbpigments.

2. Verwendung nach Anspruch 1, wobei die Komponente (a) in Konzentrationen von 45 bis 50 Gew.% vorhanden ist.

3. Verwendung nach Anspruch 1, wobei die Komponente (b) in Konzentrationen von 12 bis 18 Gew.% vorhanden ist.

4. Verwendung nach Anspruch 1, wobei die Komponente (c) in Konzentrationen von 3 bis 4 Gew.% vorhanden ist.

5. Verwendung nach Anspruch 1, wobei die Komponente (d) in Konzentrationen von 1 bis 2 Gew.% vorhanden ist.

6. Verwendung nach Anspruch 1, wobei die Komponente (e) in Konzentrationen von 25 bis 40 Gew.% vorhanden ist.

7. Verwendung nach Anspruch 1, wobei die Komponente (f) in Konzentrationen von 1 bis 4 Gew.% vorhanden ist.

8. Verwendung nach Anspruch 1, wobei das zum Plattieren verwendete Metall ausgewählt ist aus der Gruppe bestehend aus Kupfer, Chrom, Gold, Silber, Aluminium, Nickel und Metalllegierungen, gegebenenfalls Stahl und Bronze.

9. Verwendung nach Anspruch 1, wobei das Farbpigment schwarze Farbe ist.

10. Metallplattierter Artikel, der unter Verwendung der in einem der vorhergehenden Ansprüche 1 bis 9 genannten Polymerzusammensetzung hergestellt ist.

11. Verwendung des metallplattierten Artikels nach Anspruch 10 in der Automobilindustrie zur Herstellung von sowohl inneren als auch äußeren Teilen oder Oberflächen.

12. Verwendung des metallplattierten Artikels nach Anspruch 10 in der Möbelindustrie.

13. Verwendung des metallplattierten Artikels nach Anspruch 10 zur Herstellung von Werkzeug- und Haushaltsgegenständen.

## Revendications

1. Utilisation d'une composition polymère pour la production d'articles plaqués de métal, la composition comprenant, en poids :
a) 40 à 60 % d'un homopolymère de propylène ou d'un copolymère de propylène contenant jusqu'à 5 % en poids d'éthylène et/ou d'une autre alpha-oléfine en C₄-C₁₀ et présentant une température de fusion de 155 °C ou plus et/ou une fraction soluble dans le xylène à 25 °C de 10 % en poids ou moins ;
b) 10 à 20 % d'un copolymère élastoplastique à base d'éthylène (plastomère), éventuellement d'un copolymère d'éthylène avec une alpha-oléfine en C₄-C₁₀ ;
c) 2 à 6 % d'un copolymère séquencé de styrène ;
d) éventuellement jusqu'à 3 % d'un homopolymère de propylène présentant un indice de fluidité à chaud (230 °C/2,16 kg) de 500 g/10 min ou plus ;
e) 15 à 40 % d'une charge ; et,
f) éventuellement jusqu'à 6 % d'un pigment coloré.

2. Utilisation selon la revendication 1, le constituant (a) étant présent à des concentrations de 45 à 50 % en poids.

3. Utilisation selon la revendication 1, le constituant (b) étant présent à des concentrations de 12 à 18 % en poids.

4. Utilisation selon la revendication 1, le constituant (c) étant présent à des concentrations de 3 à 4 % en poids.

5. Utilisation selon la revendication 1, le constituant (d) étant présent à des concentrations de 1 à 2 % en poids.

6. Utilisation selon la revendication 1, le constituant (e) étant présent à des concentrations de 25 à 40 % en poids.

7. Utilisation selon la revendication 1, le constituant (f) étant présent à des concentrations de 1 à 4 % en poids.

8. Utilisation selon la revendication 1, le métal utilisé pour le placage étant choisi dans le groupe constitué par le cuivre, le chrome, l'or, l'argent, l'aluminium, le nickel et les alliages métalliques, éventuellement l'acier et le bronze.

9. Utilisation selon la revendication 1, le pigment coloré étant de couleur noire.

10. Article plaqué de métal préparé à l'aide de la composition polymère mentionnée dans l'une quelconque des revendications 1 à 9 précédentes.

11. Utilisation de l'article plaqué de métal selon la revendication 10 dans l'industrie automobile pour la production à la fois de parties ou de surfaces intérieures et extérieures.

12. Utilisation de l'article plaqué de métal selon la revendication 10 dans l'industrie du meuble.

13. Utilisation de l'article plaqué de métal selon la revendication 10 pour la production d'articles d'outillage et de ménage.
